Europäisches Patentamt

European Patent Office

Office européen des brevets

(11) Veröffentlichungsnummer: **0 343 318**
**A2**

## (12) EUROPÄISCHE PATENTANMELDUNG

(21) Anmeldenummer: **89101997.8**

(22) Anmeldetag: **06.02.89**

(51) Int. Cl.⁴: **B60J 7/00**

(30) Priorität: **25.05.88 DE 3817681**

(43) Veröffentlichungstag der Anmeldung:
**29.11.89 Patentblatt 89/48**

(84) Benannte Vertragsstaaten:
**DE ES FR GB IT NL SE**

(71) Anmelder: **Webasto AG Fahrzeugtechnik**
**Kraillingerstrasse 5**
**D-8035 Stockdorf(DE)**

(72) Erfinder: **Meiler, Klaus**
**Weilheimerstrasse 24**
**D-8134 Pöcking(DE)**
Erfinder: **Jardin, Hans**
**Moosstrasse 25a**
**D-8084 Inning(DE)**
Erfinder: **Hafner, Andreas**
**Hauptstrasse 39**
**D-8084 Inning/Buch(DE)**

(54) **Fahrzeugdach.**

(57) Fahrzeugdach mit einem Deckel, der in einer Schließstellung eine Dachöffnung in einer festen Dachfläche verschließt und der durch Schwenken um eine nahe einer seiner Außenkanten liegende Schwenkachse über eine feste Dachfläche ausstellbar ist. Unterhalb des Deckels ist ein Himmel angeordnet, der beim Ausstellen des Deckels um eine parallel zu der Deckelschwenkachse liegende Knickachse abgeknickt wird. Der Himmel ist im Bereich der Knickachse mit mindestens einem von der Himmeloberseite nach unten über einen Teil der Höhenabmessung des Himmels reichenden, parallel zu der Knickachse verlaufenden, sich im nichtabgeknickten Zustand des Himmels nach oben verbreiternden Einschnitt versehen, der beim Ausstellen des Deckels das Abknicken des Himmels erlaubt.

FIG. 4

## Fahrzeugdach

Die Erfindung bezieht sich auf ein Fahrzeugdach mit einem Deckel, der in einer Schließstellung eine Dachöffnung in einer festen Dachfläche verschließt und der durch Schwenken um eine nahe einer seiner Außenkanten liegende Schwenkachse über die feste Dachfläche ausstellbar ist, und mit einem unterhalb des Dekkels angeordneten Himmel, der beim Ausstellen des Deckels um eine parallel zu der Deckelschwenkachse liegende Knickachse abgeknickt wird.

Bei einem bekannten Fahrzeugdach dieser Art (DE-OS 34 17 340) ist der Himmel als Sandwichplatte mit unterer Deckschicht ausgebildet und die die Unterseite der Kernschicht der Sandwichplatte abdeckende Deckschicht ist im Knickbereich in die Kernschicht hineingeführt. Dadurch entsteht jedoch ein vom Fahrzeuginnenraum aus sichtbarer Spalt in der Himmelunterseite. Ein solcher Spalt ist aus ästhetischen Gründen oft unerwünscht. Hinzu kommt, daß die Fertigung des bekannten Himmels relativ aufwendig ist. Es ist ferner ein Kraftfahrzeugdach mit ausstellbarem Deckel und einem die Ausstellbewegung des Deckels mitmachenden Himmel bekannt, wobei der Himmel einen stoffbespannten Himmelrahmen aufweist, der aus drei Traversen besteht, die über seitliche Längsstreben aus Federstahlband miteinander verbunden sind (DE-AS 24 35 551). Beim Ausstellen des Deckels werden die Längsstreben elastisch verformt. Dabei muß jedoch eine relativ hohe Federkraft überwunden werden. Dies führt zu einer unerwünschten Vergrößerung der Momente, die für das Betätigen des Daches aufgebracht werden müssen.

Der im Patentanspruch 1 angegebenen Erfindung liegt die Aufgabe zugrunde, ein Fahrzeugdach mit ausstellbarem Deckel und einem die Dekkelausstellbewegung zum Teil mitmachenden Himmel zu schaffen, bei welchem der Himmel in jeder Betriebsstellung von unten ein ansprechendes Aussehen hat, die zum Abknicken des Deckels erforderlichen Kräfte relativ gering sind sowie der Fertigungs- und der Montageaufwand für den Himmel klein bleiben.

Mit der Erfindung wird diese Augabe bei einem Fahrzeugdach der eingangs bezeichneten Gattung dadurch gelöst, daß der Himmel im Bereich der Knickachse mit mindestens einem von der Himmeloberseite nach unten über einen Teil der Höhenabmessung des Himmels reichenden, parallel zu der Knickachse verlaufenden, sich im nicht abgeknickten Zustand des Himmels nach oben verbreiternden Einschnitt versehen ist, der beim Ausstellen des Deckels das Abknicken des Himmels aufgrund der Flexibilität des von dem Einschnitt nichtdurchtrennten Teils des Himmels erlaubt.

Bei dem Fahrzeugdach nach der Erfindung befindet sich an der Unterseite des Himmels im Knickbereich kein störender Spalt. Der von dem Einschnitt nichtdurchtrennte Teil des aus Kunststoff gefertigten Himmels übt eine ausreichende Federwirkung aus, um den Himmel bei einem Übergang des Deckels von der ausgestellten Lage in die Schließstellung in seine nicht abgeknickte Ausgangslage zurückzubringen. Die beim Ausstellen des Deckels zu überwindende Federkraft ist geringer als bei der geschilderten bekannten Lösung mit Federstahlband-Längsstreben. Fertigung und Montage des Himmels sind einfach und problemlos. Der oder die Einschnitte können in Form von Kerben, Rillen oder dergleichen im Zuge der Fertigung des Himmels angeformt werden. Es ist aber auch möglich, diese Einschnitte nachträglich in den fertigen Himmel beispielsweise durch Sägen, Fräsen oder dergleichen einzubringen.

Bei dem Himmel kann es sich beispielsweise um eine spritzgegossene Platte aus einem Thermoplast handeln.

Entsprechend einer vorteilhaften weiteren Ausgestaltung der Erfindung ist vorgesehen, daß der Himmel eine Sandwichplatte mit einer Kernschicht und mindestens einer die Unterseite der Kernschicht abdeckenden Deckschicht aufweist, die Sandwichplatte mindestens im Bereich der zu der Knickachse senkrecht verlaufenden Außenkanten mit Flanschen von gegenüber einem Hauptteil der Sandwichplatte verminderter Dicke versehen ist, und der mindestens eine Einschnitt in dem zwischen den Flanschen liegenden, dickeren Hauptteil ausgebildet ist. Eine solche Sandwichplatte sorgt für eine gute Schalldämmung und für verhältnismäßig niedriges Gewicht.

Ein als Sandwichplatte ausgebildeter Schiebehimmel mit einer Kernschicht und darauf mindestens einseitig aufgebrachter Deckschicht, bei welchem die Sandwichplatte im Bereich ihrer Seitenkanten unter Ausbildung von Führungsstegen zusammengequetscht ist, ist zwar aus der DE-OS 33 23 396 bekannt. Dieser bekannte Schiebehimmel ist aber weder dazu bestimmt noch geeignet, Ausstellbewegungen des Deckels unter Abknicken zu folgen.

Im Falle eines Sandwichplattenhimmels können die Einschnitte vor der Unterseite der Kernschicht enden oder bis zur Unterseite der Kernschicht durchgehen.

Die Unterseite des Himmels besteht vorzugsweise mindestens zum Teil aus einem Himmelstoff oder ist mit einem Himmelstoff überzogen, und der Himmelstoff ist mit dem übrigen Teil des Himmels vollflächig verklebt. Ein Flattern des Himmelstoffes ist damit in jeder Betriebsstellung des Fahrzeugdaches ausgeschlossen.

Durch geeignete Wahl der Anzahl und der Form der Einschnitte können unterschiedliche Ausstellformen des Himmels vorgegeben werden. Ein einziger Einschnitt führt zu einer relativ scharfen Knicklinie. Optisch ansprechender ist in der Regel ein mehr oder minder großer Krümmungsradius im Knickbereich oder auch eine von einem Kreisbogen abweichende Knickkurve. Für diesen Zweck sind vorteilhaft mehrere parallel verlaufende Einschnitte vorgesehen.

Bei einem gewölbten Himmel können der oder die Einschnitte im nicht abgeknickten Zustand des Himmels eine wölbungsabhängig derart variierende Breite haben, daß nach dem Abknicken die oberen Einschnittränder im wesentlichen parallel zueinander verlaufen. Diese Ausbildung gestattet es, auch gewölbte Himmel einwandfrei und problemlos beim Ausstellen des Deckels abzuknicken.

Ausführungsbeispiele der Erfindung sind im folgenden unter Bezugnahme auf die Zeichnungen näher erläutert. Es zeigen:

Fig. 1 schematisch einen Längsschnitt durch ein Schiebehebedach,

Fig. 2 eine Draufsicht auf den Himmel,

Fig. 3 einen Längsschnitt durch den Himmel entlang der Linie III-III der Fig. 2,

Fig. 4 einen Längsschnitt entsprechend Fig. 3, bei welchem der Himmel in der Lage veranschaulicht ist, die er bei ausgestelltem Deckel einnimmt,

Fig. 5 eine Draufsicht auf einen Himmel gemäß einer abgewandelten Ausführungsform der Erfindung,

Fign. 6 und 7 Längsschnitte durch den Himmel entlang der Linie VI-VI bzw. VII-VII der Fig. 5.

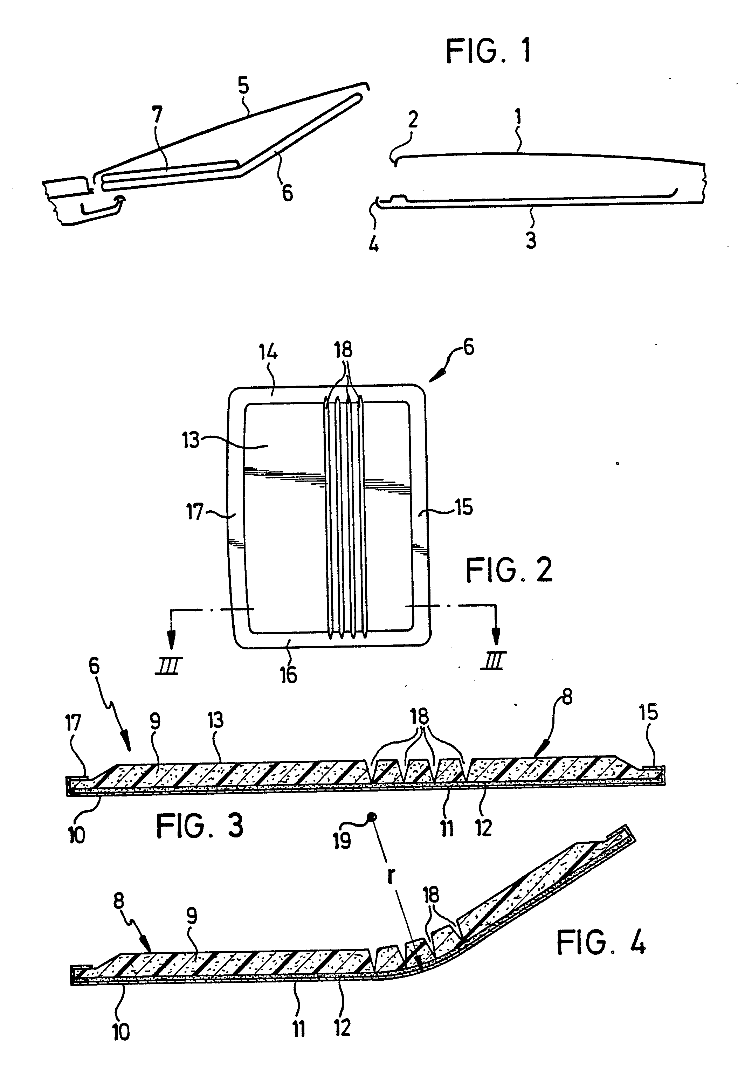

Wie aus Fig. 1 hervorgeht, ist in dem vorderen Teil der festen Dachfläche 1 eines Fahrzeuges eine rechteckige Dachöffnung 2 ausgebildet, an deren Unterseite ein Dachrahmen sitzt. Der Dachrahmen 3 begrenzt eine Rahmenöffnung 4, die im wesentlichen der Dachöffnung 2 entspricht. Zum Verschließen oder mindestens teilweisen Freigeben der Dachöffnung 2 ist ein Deckel 5 vorgesehen, der an Führungsschienen zu beiden Seiten der Öffnung 4 des Dachrahmens 3 geführt ist. Der Deckel 5 kann mittels eines Antriebes wahlweise in eine Schließstellung, in welcher er die Dachöffnung 2 verschließt, eine ausgestellte Lage, in welcher der Deckel 5 durch Schwenken um eine nahe seiner Vorderkante liegende Schwenkachse hinten über die feste Dachfläche 1 ausgestellt ist, und eine zurückgeschobene Lage gebracht werden, in welcher der Deckel 5 an der Rückseite der Dachöffnung 2 zwischen der festen Dachfläche 1 und dem Dachrahmen 3 liegt, um die Dachöffnung 2 freizugeben. Die Öffnung 4 des Dachrahmens 3 kann mittels eines Himmels 6 wahlweise freigegeben oder verschlossen werden. Der Himmel 6 läßt sich in Fahrzeuglängsrichtung zwischen einer Schließstellung, in welcher er die Rahmenöffnung 4 abdeckt, und einer Offenstellung verschieben, in welcher der Himmel 6 an der Rückseite der Dachöffnung 2 zwischen der festen Dachfläche 1 und dem Dachrahmen 3 steht und die Rahmenöffnung 4 freigibt. Wenn der Deckel 5 und der Himmel 6 ihre vordere Endstellung einnehmen und der Deckel 5 in die Lüftungsstellung gemäß Fig. 1 ausgestellt wird, wird der Himmel 6 in seinem vorderen Teil von einer einen Teil der beiden Führungsschienen bildenden Führung 7 beidseitig geführt. Der hintere Teil des Himmels 6 wird dagegen durch Zusammenwirken mit dem hinteren Ende des Deckels 5 oder von Hand in eine Ausstell-Schräglage gebracht. Dabei wird der Himmel 6 entlang einer quer zur Fahrzeuglängsrichtung verlaufenden Knickachse abgeknickt, wobei der hintere Teil des Himmels eine nach hinten ansteigende Schräglage annimmt. Es entsteht auf diese Weise ein Lüftungsspalt zwischen der festen Dachfläche 1 und dem Deckel 5 sowie dem Himmel 6.

Der Himmel 6 besteht im wesentlichen aus einer Sandwichplatte 8, die eine Kernschicht 9 und eine untere Deckschicht 10 aufweist. Die Deckschicht 10 ist bei der veranschaulichten Ausführungsform zweilagig ausgebildet. Die untere Lage 11 besteht aus einem Himmelstoff, die obere Lage 12 aus einem geräuschdämmenden Schaumstoff. Bei der Kernschicht 9 kann es sich insbesondere um eine Wabenstruktur aus Kunststoff, getränktem Papier oder Metallfolie, insbesondere Aluminiumfolie, handeln. Die Waben der Kernschicht 9 sind zweckmäßig mindestens teilweise mit einer Hartschaumfüllung ausgefüllt. Die Lagen 11 und 12 sind untereinander und mit der Kernschicht 9 vollflächig verklebt. Die Sandwichplatte 8 weist einen relativ dicken Hauptteil 13 sowie im Bereich der Außenkanten Flansche 14, 15, 16 und 17 auf, die eine gegenüber dem Hauptteil 13 verminderte Dicke haben. Die Flansche 14 bis 17 werden zweckmäßig dadurch erhalten, daß die zunächst gleichmäßig dicke Sandwichplatte im Bereich ihrer Außenkanten zusammengequetscht wird, wie dies an sich aus der DE-OS 33 23 396 bekannt ist.

Der dickere Hauptteil 13 der Sandwichplatte 8 ist bei dem Ausführungsbeispiel gemäß den Fign. 2, 3 und 4 mit vier quer zur Fahrzeuglängsrichtung verlaufenden Einschnitten 18 versehen, die sich im nichtabgeknickten Zustand der Sandwichplatte 8 nach oben verbreitern. Die Einschnitte 18 reichen über die volle Breite des Hauptteils 13 und sie gehen bei dem Ausführungsbeispiel der Fign. 2 bis 4 bis zur Unterseite der Kernschicht 9 durch. Die Einschnitte sind kerben- oder rillenförmig ausgebildet. Sie können bei der Fertigung der Sandwichplatte angeformt oder nachträglich, beispielsweise durch Sägen oder Fräsen, eingearbeitet sein. Die Einschnitte 18 erlauben es, beim Ausstellen des Deckels 5 den Himmel 6 in der in Fig. 4 angedeuteten Weise mit einem Krümmungsradius r um eine Knickachse 19 abzuknicken, wobei die Flansche 14 und 16 entsprechend abgebogen werden.

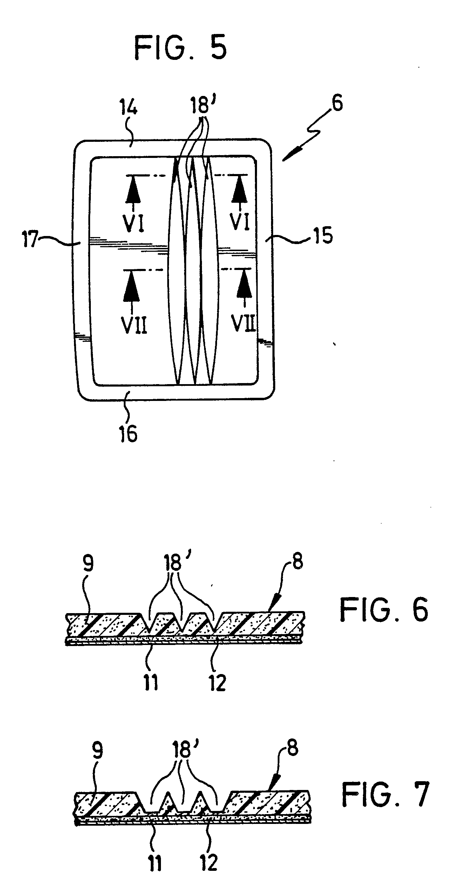

Während bei dem Ausführungsbeispiel nach den Fign. 2 bis 4 die Einschnitte 18 einen über ihre Längsabmessung konstanten Querschnitt haben, zeigen die Fign. 5 bis 7 eine abgewandelte Ausführungsform mit Einschnitten 18' von in Längsrichtung der Einschnitte variierender Breite. Bei diesem Ausführungsbeispiel sind die Einschnitte 18' im mittleren Teil (Fig. 7) breiter als nahe den Seitenkanten (Fig. 6) Einschnitte 18' von unterschiedlicher Breite erlauben es, einen gewölbten Himmel in der gewünschten Weise abzuknicken. Die Ausführungsform gemäß den Fign. 5 bis 7 unterscheidet sich von der zuvor erläuterten Ausführungsform dadurch, daß die Einschnitte 18 kurz vor der Unterseite der Kernschicht 9 enden.

Die erläuterte Himmelausbildung eignet sich für Ausstelldächer ebenso wie für Schiebehebedächer sowie unabhängig davon, ob der Deckel aus durchsichtigem oder undurchsichtigem Werkstoff gefertigt ist. Durch Variieren der Anzahl der Einschnitte 18, 18' läßt sich das Knickverhalten des Himmels, insbesondere die Größe des Krümmungsradius r, beeinflussen. Der erläuterte Himmel kommt ohne zusätzliche Teile, wie seitliche Federbänder, aus.

## Ansprüche

1. Fahrzeugdach mit einem Deckel, der in einer Schließstellung eine Dachöffnung in einer festen Dachfläche verschließt und der durch Schwenken um eine nahe einer seiner Außenkanten liegende Schwenkachse über die feste Dachfläche ausstellbar ist, und mit einem unterhalb des Deckels angeordneten Himmel, der beim Ausstellen des Deckels um eine parallel zu der Deckelschwenkachse liegende Knickachse abgeknickt wird, **dadurch gekennzeichnet,** daß der Himmel (6) im Bereich der Knickachse (19) mit mindestens einem von der Himmeloberseite nach unten über einen Teil der Höhenabmessung des Himmels reichenden, parallel zu der Knickachse verlaufenden, sich im nicht abgeknickten Zustand des Himmels nach oben verbreiternden Einschnitt (18, 18') versehen ist, der beim Ausstellen des Deckels (5) das Abknicken des Himmels aufgrund der Flexibilität des von dem Einschnitt nichtdurchtrennten Teils des Himmels erlaubt.

2. Fahrzeugdach nach Anspruch 1, dadurch gekennzeichnet, daß der Himmel (6) eine Sandwichplatte (8) mit einer Kernschicht (9) und mindestens einer die Unterseite der Kernschicht abdeckenden Deckschicht (10) aufweist, die Sandwichplatte mindestens im Bereich der zu der Knickachse (19) senkrecht verlaufenden Außenkanten mit Flanschen (14,16) von gegenüber einem Hauptteil (13) der Sandwichplatte verminderter Dicke versehen ist, und der mindestens eine Einschnitt (18, 18') in dem zwischen den Flanschen (14, 16) liegenden, dickeren Hauptteil (13) ausgebildet ist.

3. Fahrzeugdach nach Anspruch 2, dadurch gekennzeichnet, daß der mindestens eine Einschnitt (18') vor der Unterseite der Kernschicht (9) endet.

4. Fahrzeugdach nach Anspruch 2, dadurch gekennzeichnet, daß der mindestens eine Einschnitt (18) bis zur Unterseite der Kernschicht (9) durchgeht.

5. Fahrzeugdach nach einem der vorhergehenden Ansprüche, dadurch gekennzeichnet, daß die Unterseite des Himmels (6) mindestens zum Teil aus einem Himmelstoff (11) besteht oder mit einem Himmelstoff überzogen ist, und daß der Himmelstoff (11) mit dem übrigen Teil des Himmels vollflächig verklebt ist.

6. Fahrzeugdach nach einem der vorhergehenden Ansprüche, dadurch gekennzeichnet, daß mehrere parallel verlaufende Einschnitte (18, 18') vorgesehen sind.

7. Fahrzeugdach nach einem der vorhergehenden Ansprüche, dadurch gekennzeichnet, daß bei einem gewölbten Himmel (6) der oder die Einschnitte (18') im nicht abgeknickten Zustand des Himmels eine wölbungsabhängig derart variierende Breite haben, daß nach dem Abknicken die oberen Einschnittränder im wesentlichen parallel zueinander verlaufen.

FIG. 1

FIG. 2

FIG. 3

FIG. 4

# FIG. 5

# FIG. 6

# FIG. 7